(19) Europäisches Patentamt
European Patent Office
Office européen des brevets

(11) EP 0 548 025 B1

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int. Cl.$^6$: **A01N 43/54**
// (A01N43/54, 43:653, 55:00)

(21) Anmeldenummer: **92810991.7**

(22) Anmeldetag: **11.12.1992**

(54) **Mikrobizide**
Microbicide
Microbicide

(84) Benannte Vertragsstaaten:
**AT BE CH DE DK ES FR GB GR IE IT LI LU MC NL PT SE**

(30) Priorität: **19.12.1991 CH 3780/91**

(43) Veröffentlichungstag der Anmeldung:
**23.06.1993 Patentblatt 1993/25**

(73) Patentinhaber: **CIBA-GEIGY AG**
**CH-4002 Basel (CH)**

(72) Erfinder:
- **Mittermeier, Ludwig, Dr.**
  **W-7800 Freiburg (DE)**
- **Ruess, Wilhelm**
  **CH-4148 Pfeffingen (CH)**

(56) Entgegenhaltungen:
**EP-A- 0 310 550** **DD-A- 151 404**
**DE-A- 3 242 645** **DE-A- 3 715 705**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 548 025 B1

Printed by Rank Xerox (UK) Business Services
2.11.2/3.4

## Beschreibung

Die vorliegende Erfindung betrifft fungizide Zweikomponenten-Gemische mit synergistisch gesteigerter Wirkung und Verfahren zur Anwendung solcher Gemische im Pflanzenschutz.

Die Komponente I ist ein Ergosterin-Biosynthese-Hemmer der Triazol-Reihe oder eines ihrer Salze oder Metalikomplexe, ausgewählt aus

A) 1-[2-(2,4-Dichlorphenyl)-4-propyl-1,3-dioxolan-2-ylmethyl]-1H-1,2,4-triazol, „Propiconazol," (Referenz: GB-1,522,657);

B) 1-(2-[2-Chlor-4-(4-chlorphenoxy)-phenyl]-4-metnyl-1,3-dioxolan-2-ylmethyl)-1H-1,2,4-triazol, „Difenoconazol," (Referenz: GB-2,098,607);

C) α-[2-(4-Chlorphenyl)ethyl]-α-(1,1-dimethylethyl)-1H-1,2,4-triazol-1-ethanol, „Tebuconazol," (Referenz: EP-A-40 345);

D) 1-(4-Chlorphenoxy)-3,3-dimethyl-1-(1,2,4-triazol-1-yl)-butan-2-ol, „Triadimenol," (Referenz: DE-OS 23 24 010);

E) 1-[3-(2-Chlorphenyl)-2-(4-fluorphenyl)oxiran-2-ylmethyl]-1H-1,2,4-triazol, Code-Bezeichnung BAS-480-F, (Referenz EP-A-196 038);

F) α-(4-Chlorphenyl)-α-(1-cyclopropylethyl)-1H-1,2,4-triazol-1-ethanol, „Cyproconazol" (Referenz: US-4,664,696);

G) 4-(4-Chlorphenyl)-2-phenyl-2-(1,2,4-triazol-1-ylmethyl)-butyronitril, „Fenbuconazol" (Referenz: EP-A-251 775);

H) α-(2-Fluorophenyl)-α-(4-fluorophenyl)-1H-1,2,4-triazol-1-ethanol, „Flutriafol" (Referenz: EP-A-15 756);

J) α-Butyl-α-(2,4-dichlorphenyl)-1H-1,2,4-triazol-1-ethanol, „Hexaconazol" (Referenz: GB-2,119,653); und

K) 1-{[Bis(4-fluorophenyl)methylsilyl]methyl)-1H-1,2,4-triazol, „Flusilazol" (Referenz: US-4,510,136).

Die Komponente II ist das 2-Anilinopyrimidin der Formel

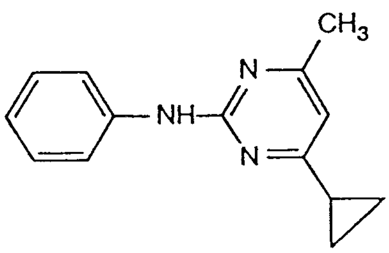

II

4-Cyclopropyl-6-methyl-N-phenyl-2-pyrimidinamin oder eines seiner Salze oder seiner Metallkomplexe (Referenz: EP-A-310 550).

Unter den Säuren, die zur Herstellung von Salzen der Formel I oder II verwendet werden können, sind zu nennen: Halogenwasserstoffsäure wie Fluorwasserstoffsaure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der beiden basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten

bis achten Nebengruppe wie Chrom, Mangan, Eisen, Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten, wie etwa bei den vorerwähnten Mischkomplexen aus Triazolkomponente I und Anilinopyrimidin II.

Die Triazol-Komponenten I können in stereoisomeren Formen oder als Racemate vorliegen. Während die Komponenten IC und IG bis IJ zwei Stereoisomere bilden können, sind für die übrigen Komponenten IA (Propiconazol), IB (Difenoconazol), ID (Triadimenol), IE (BAS-480-F) und IF (Cyproconazol) jeweils vier Stereoisomere möglich. Die verschiedenen stereoisomeren Formen eines der Präparate können unterschiedliche fungizide Wirkung haben. Beim Propiconazol beispielsweise sind die beiden cis-Isomeren bevorzugt, d.h. jene Enantiomeren, bei denen die Triazolylmethylgruppe und die Propylgruppe auf der gleichen Seite des Dioxolanrings stehen. Beim BAS-480-F sind die beiden Z(=cis)-Enantiomere bevorzugt.

In der Praxis kann man vorteilhaft die Wirkstoffe I und II als freie Basen und in der Racematform einsetzen, denen man auch weitere agrarchemische Aktivsubstanzen wie Insektizide, Akarizide, Nematizide, Herbizide, Wuchsregulatoren und Düngemittel, insbesondere aber weitere Mikrobizide, zufügen kann.

In den letzten Jahren sind sogenannte Ergosterin-Biosynthese-Hemmer in verstärktem Masse auf den Markt gekommen, d.h. Präparate, deren Fungizid-Wirkung darauf beruht, die Biosynthese des in der Zellmembran von Pilzen vorkommenden Ergosterins zu hindern. Fungizide, die im Molekül einen 1H-1,2,4-Triazolrest enthalten, wirken in der Regel bei diesem Vorgang als 14-C Demethylierungshemmer (= DMI). Der jahrelange Einsatz von Präparaten auf Triazol-Basis hat allerdings stellenweise schon zum Auftreten von Pilzstämmen mit nachweislich reduzierter Sensitivität geführt.

In DE 32 42 645 werden synergistische fungizide Mischungen beschrieben, worin die eine Komponente ein 2-Aminopyrimidin-Derivat und die andere Komponente ein Ergosterin-Biosynthese-Hemmer ist. Diese 2-Aminopyrimidin-Derivate unterscheiden sich strukturell wesentlich von der Verbindung der Formel II der vorliegenden Erfindung.

Es hat sich nun überraschenderweise gezeigt, dass generell Mischungen von beliebigen Triazol-Fungiziden und insbesondere die der Komponenten I mit dem Anilinopyrimidin II in bestimmten Mengenverhältnissen in ihrer fungiziden Wirkung nicht nur additive Wirkung, sondern deutliche synergistisch gesteigerte Wirkung auch bei Pilz-Isolaten entfalten, die eine reduzierte Sensitivität auf Triazol-Fungizide erworben haben.

Eine generelle Lehre vorliegender Erfindung ist das Auftreten einer sprungartigen Wirkungssteigerung, sobald auch nur Spuren eines beliebigen Triazol-Fungizides, die selbst noch keine sichtbare Aktivität entfalten, mit der Komponenente II, 4-Cyclopropyl-6-methyl-N-phenyl-2-pyrimidinamin, zusammenwirken.

Die vorliegende Erfindung stellt daher eine ganz wesentliche Bereicherung der Technik dar.

Gegenstand der vorliegenden Erfindung ist neben dem Zweikomponenten-Gemisch auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) einer der Komponenten I oder einem seiner (Metall) Salze und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 10:1 bis 1:20, bevorzugt I:II = 6:1 bis 1:6. In vielen Fällen sind Mischungen vorteilhaft, bei denen das Mischungsverhältnis der reinen Aktivsubstanzen I:II = 1:1 bis 1:6 beträgt, z.B. 2:5, 1:3, 1:4 oder 1:6.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Dies trifft insbesondere auch auf Mikroorganismen zu, die gegen Fungizide aus der Triazol-Klasse reduzierte Sensitivität entwickelt haben.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Alternia, Pyricularia und insbesondere Pseudocercosporella herpotrichoides). Die Wirkstoffgemische wirken systemisch. Sie können auch als Beizmittel zur Behandlung von Saatgut (Früchte, Knollen, Körner) und Pflanzenstecklinge zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch ihre Umweltfreundlichkeit aus.

Als Ziekulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oekulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder

Pflanzen wie Mais, Tabak, Nüsse, Kaffe, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Die Wirkstoff-Gemische der Formeln I und II werden üblicherweise in Form von Zusammensetzungen verwendet. Die Wirkstoffe der Formel I und der Wirkstoff der Formel II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikations-fördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch auf Samenkörner aufgebracht werden (Coating), indem man die Körner entweder nacheinander in einer flüssigen Zubereitung eines Wirkstoffs tränkt oder sie mit einer bereits kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 50 g bis 2 kg AS/ha, insbesondere bei 100 g bis 1000 g AS/ha, besonders bevorzugt bei 250 g bis 850 g AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Akohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrücksände verwendet werden.

Als oberflächenaktive Verbindungen kommen je nach Art der zu formulierenden Wirkstoffe der Formeln I und II nichtionogene, kation- un/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95 % Wirkstoffe der Formeln I und II, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus Verbindung I und Verbindung II in einem bestimmten Mischungs-Verhältnis bedeutet.

| Spritzpulver | a) | b) | c) |
|---|---|---|---|
| Wirkstoff [I:II = 2:3(a), 1:1(b), 1:6(c)] | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 2:5) | 10% |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Verdünnung hergestellt werden, die sich im Pflanzenschutz, einsetzen lassen.

| Stäubemittel | a) | b) | c) |
|---|---|---|---|
| Wirkstoff [I:II = 1:4(a); 1:5 (b) und 1:1(c)] | 5% | 6% | 4% |
| Talkum | 95% | - | - |
| Kaolin | - | 94% | - |
| Gesteinsmehl | - | - | 96% |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
|---|---|
| Wirkstoff (I:II = 2:3) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:5) | 8 % |
| Polyethylenglykol (MG 200) | 3 % |
| Kaolin | 89 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II = 3:7) | 40 % |
| Propylenglykol | 10 % |
| Nonylphenolpolyethylenglykolether (15 Mol Et-oxid) | 6% |
| Na-Ligninsulfonat | 10 % |
| Carboxymethylcellulose | 1 % |
| Silikonöl (in Form 75%ig. wässriger Emulsion) | 1% |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combinations". Weeds 15, Seiten 20-22, 1967) (LIMPEL and al., 1062 "Weeds control by ... certain combinations". Proc. NEWCL, Vol. 16, pp. 48-53):
(g AS/ha = Gramm Aktivsubstanz je Hektar)

X = % Wirkung durch Fungizid I bei p g AS/ha
Y = % Wirkung durch Fungizid II bei q g AS/ha
E = die erwartete Wirkung der Fungizide I+II bei p+q g AS/ha Aufwandmenge (additive Wirkung),

dann ist Colby:

$$E = X + Y - \frac{X \cdot Y}{100}$$

Wenn die tatsächlich beobachtete Wirkung (O) grösser ist als die erwartete, so ist die Kombination in ihrer Wirkung überadditiv, d.h. es liegt ein synergistischer Effekt vor.

Beispiel 1: Wirkung gegen "Echten Mehltau" auf Winterweizen

Methode:

In Töpfen von 16 cm Durchmesser werden im Gewächshaus ca. 20 Pflanzen der Winterweizensorte "Bernina" bei 20°C und 60 % relativer Luftfeuchte während 12 Std. Tag bzw. bei 16°C und 80 % relativer Luftfeuchte während der Nacht herangezogen. Zu Beginn der Bestockung (EC 21) werden die Pflanzen mit einem Isolat von Erysiphe graminis f.sp. tritici inokuliert, das eine reduzierte Sensitivität gegen DMI-Fungizide aufweist.

3 Tage nach der Inokulation wird der Einzelwirkstoff bzw. das Fungizid-Gemisch als wässrige Suspension mit einem Spritzbaken unter Feldbedingungen mit einer Wasser-aufwandmenge von 500 l/ha appliziert. 4 Tage bzw. 11 Tage nach der Applikation wird die Veränderung des Befalls auf der bei der Inokulation vorhandenen Blattfläche bestimmt (Auswertung des Primärbefalls). Jeder der 15 Versuche läuft in 3 Wiederholungen.

Es werden die in den Tabellen 1a und 2a wiedergegebenen Aufwandmengen eingesetzt.

Mit Mischungen bestehend aus IA (= Propiconazol) und II werden folgende Resultate erzielt:

Tabelle 1a

| Auswertung 7 Tage nach Versuchsbeginn (Wirkstoff IA = Propiconazol) | | | | | |
|---|---|---|---|---|---|
| Versuch Nr. | g Aktivsubstanz/ha | | Pilz befall in % | E % Wirkung berechnet [COLBY] | O % Wirkung gefunden |
| | Wirkstoff I | Wirkstoff II | | | |
| 1 (Kontrolle) | - | - | 38 | - | |
| 2 | 25 | - | 35 | - | 8 |
| 3 | 50 | - | 24 | - | 37 |
| 4 | 125 | - | 3 | - | 92 |
| 5 | - | 25 | 30 | - | 21 |
| 6 | - | 50 | 15 | - | 61 |
| 7 | - | 125 | 10 | - | 74 |
| 8 | - | 750 | 7 | - | 82 |
| 9 | 25 | 25 | 16 | 27 | 58 |
| 10 | 25 | 50 | 11 | 64 | 71 |
| 11 | 25 | 125 | 4 | 76 | 89 |
| 12 | 50 | 25 | 10 | 50 | 74 |
| 13 | 50 | 50 | 4 | 75 | 90 |
| 14 | 50 | 125 | 5 | 84 | 87 |
| 15 | 125 | 25 | 2 | 94 | 95 |

Tabelle 1b

| Auswertung 14 Tage nach Versuchsbeginn (Wirkstoff IA = Propiconazol) | | | | | |
|---|---|---|---|---|---|
| Versuch Nr. | g ktivsubstanz/ha | A | Pilz befall in % | E % Wirkung berechnet [COLBY] | O % Wirkung gefunden |
| | Wirkstoff I | Wirkstoff II | | | |
| 1 (Kontrolle) | - | - | 83 | - | |
| 2 | 25 | - | 85 | - | 2 |
| 3 | 50 | - | 68 | - | 18 |
| 4 | 125 | - | 14 | - | 83 |
| 5 | - | 25 | 78 | - | 6 |
| 6 | - | 50 | 80 | - | 4 |
| 7 | - | 125 | 55 | - | 34 |
| 8 | - | 750 | 3 | - | 96 |
| 9 | 25 | 25 | 73 | 5 | 12 |
| 10 | 25 | 50 | 78 | 1 | 6 |
| 11 | 25 | 125 | 33 | 33 | 60 |
| 12 | 50 | 25 | 53 | 23 | 36 |
| 13 | 50 | 50 | 37 | 21 | 55 |
| 14 | 50 | 125 | 40 | 46 | 52 |
| 15 | 125 | 25 | 7 | 84 | 92 |

Wie ersichtlich, tritt sowohl nach 7 wie nach 14 Tagen bei ganz unterschiedlichen Mischungsverhältnissen in den Versuchen Nr. 9 bis Nr. 15 eine synergistisch gesteigerte Fungizid-Wirkung auf.

Beispiel 2: Wirkung gegen "Septoria nodorum" (Weizen)

Methode:

Septoria nodorum wird während 2 Wochen auf Agar-Platten auf einem Nährmedium gezüchtet, bestehend aus 1 g Trockenhefe, 20 g Weizenmehl und 20 g Agar pro Liter Wasser. Zur Sporenbildung wird der Pilz in ein mit Weizensaat gefülltes Glas gegeben und bei 8°C 4 Wochen lang inkubiert (simulierter 16-Stunden-Tag). Die entstandenen Sporen werden dann mit Wasser herausgespült und nach Filtration auf eine Konzentration von 10'000 Sporen/ml (Konzentration in Mikrotiter-Platten) eingestellt.

Für die Aktivitätsmessungen der Fungizide und Fungizid-Gemische werden Mikrotiter-Platten mit 96 Röhrchen verwendet. Jedes Röhrchen wird mit einer Hamilton-Pipette mit 180 µl PDB-Nährmedium ("Potato Dextrose Broth") beschickt, das 10'000 Sporen/ml und 200 ppm Streptomycin-Sulfat zur Verhinderung von Bakterieninfektionen enthält. Dann wird jedes Röhrchen mit 20 µl einer entsprechend verdünnten Fungizid-Lösung ergänzt. Die Mikrotiter-Platten werden daraufhin für 7 Tage im Dunkeln bei 20°C inkubiert. Jede Konzentration läuft in 10-facher Wiederholung. Die Auswertung des Pilzwachstums jeder Probe erfolgt photometrisch bei 595 nm, woraus sich die Aktivität jeder Fungizid-Probe nach COLBY errechnet.

Tabelle 2a

| (Wirkstoff IF = Cyproconazol) | | | | | |
|---|---|---|---|---|---|
| Versuch Nr. | mg Aktivsubstanz/l | | Verhältnis I:II | E % Wirkung berechnet [COLBY] | O % Wirkung gefunden |
| | Wirkstoff IF | Wirkstoff II | | | |
| 1 | 0.02 | - | | - | 0 |
| 2 | 0.05 | - | | - | 0 |
| 3 | 0.1 | - | | - | 0 |
| 4 | 0.2 | - | | - | 0 |
| 5 | 0.3 | - | | - | 10 |
| 6 | - | 0.01 | | - | 19 |
| 7 | - | 0.02 | | - | 26 |
| 8 | - | 0.1 | | - | 38 |
| 9 | - | 0.3 | | - | 45 |
| 10 | 0.02 | 0.01 | 2:1 | 19 | 22 |
| 11 | 0.1 | 0.01 | 10:1 | 19 | 28 |
| 12 | 0.3 | 0.01 | 30:1 | 27.1 | 31 |
| 13 | 0.05 | 0.02 | 5:2 | 26 | 29 |
| 14 | 0.1 | 0.02 | 5:1 | 26 | 33 |
| 15 | 0.2 | 0.02 | 10:1 | 26 | 32 |
| 16 | 0.1 | 0.1 | 1:1 | 38 | 43 |
| 17 | 0.2 | 0.1 | 2:1 | 38 | 46 |
| 18 | 0.3 | 0.1 | 3:1 | 44.2 | 47 |
| 19 | 0.05 | 0.3 | 1:6 | 45 | 52 |
| 20 | 0.1 | 0.3 | 1:3 | 45 | 52 |
| 21 | 0.3 | 0.3 | 1:1 | 50.5 | 60 |

Tabelle 2b

| (Wirkstoff IJ = Hexaconazol) | | | | | |
|---|---|---|---|---|---|
| Versuch Nr. | mg Aktivsubstanz/l | | Verhältnis I:II | E % Wirkung berechnet [COLBY] | O % Wirkung gefunden |
| | Wirkstoff IJ | Wirkstoff II | | | |
| 1 | 0.01 | - | | - | 0 |
| 2 | 0.02 | - | | - | 1 |
| 3 | 0.03 | - | | - | 8 |
| 4 | 0.05 | - | | - | 16 |
| 5 | 0.1 | - | | - | 38 |
| 6 | 0.5 | - | | - | 89 |
| 7 | | 0.01 | | - | 8 |
| 8 | | 0.02 | | - | 34 |
| 9 | | 0.03 | | - | 41 |
| 10 | | 0.05 | | - | 51 |
| 11 | | 0.1 | | - | 63 |
| 12 | | 0.3 | | - | 73 |
| 13 | | 0.5 | | - | 78 |
| 14 | 0.01 | 0.01 | 1:1 | 8 | 52 |
| 15 | 0.03 | 0.01 | 3:1 | 15.36 | 44 |
| 16 | 0.05 | 0.01 | 5:1 | 22.72 | 56 |
| 17 | 0.1 | 0.01 | 10:1 | 42.96 | 60 |
| 18 | 0.5 | 0.01 | 50:1 | 89.88 | 93 |
| 19 | 0.02 | 0.02 | 1:1 | 34.66 | 71 |
| 20 | 0.01 | 0.03 | 1:3 | 41 | 73 |
| 21 | 0.01 | 0.05 | 1:5 | 51 | 80 |
| 22 | 0.01 | 0.1 | 1:10 | 63 | 82 |
| 23 | 0.02 | 0.1 | 1:5 | 63.37 | 85 |
| 24 | 0.03 | 0.3 | 1:10 | 75.16 | 89 |
| 25 | 0.5 | 0.5 | 1:1 | 97.58 | 100 |

Die Wirkung der Aktivsubstanz II kann, wie aus den Tabellen 2a und 2b ersichtlich, durch Zusatz von Spuren eines Triazols, die selbst noch keine Wirkung entfalten, deutlich gesteigert werden. In den Beispielen 3 und 4 wird dieser Effekt offensichtlich.

Beispiel 3: Wirkung gegen Drechslera teres

Methode:

Der Drechslera teres Stamm wird während 3 Wochen bei 17-21°C auf V8 Agar gezüchtet (künstlicher 16-Stunden -Tag). Die Sporen werden mit sterilem Wasser abgeschwemmt und, nach Filtration, auf eine Konzentration von 10'000 Sporen/ml eingestellt.

Es werden Mikrotiter-Platten mit 96 Röhrchen verwendet. Jedes Röhrchen wird mit 180 µl SMB-Nährmedium ("Sabonrand Maltose Broth") enthaltend 10'000 Sporen/ml und 200 ppm Streptomycin Sulfat durch eine Hamilton-Pipette

gefüllt. Dazu werden je 20 µl der zu prüfenden Fungizidlösung gegeben. Die Platten weden 5 Tage bei 20°C im Dunkeln inkubiert.

Nach dieser Periode wird die Absorption jedes Röhrchen photometrisch bei 595 nm gemessen und daraus die Aktivität abgeleitet. Jede Konzentration wird in 10 Wiederholungen geprüft.

Tabelle 3a

| (Wirkstoff IC = Tebuconazol) | | | | | |
|---|---|---|---|---|---|
| Versuch Nr. | mg Aktivsubstanz/l | | Verhältnis I:II | E % Wirkung berechnet [COLBY] | O % Wirkung gefunden |
| | Wirkstoff IC | Wirkstoff II | | | |
| 1 | 0.01 | - | | | 0 |
| 2 | 0.02 | - | | | 0 |
| 3 | 0.05 | - | | | 0 |
| 4 | - | 0.007 | | | 6 |
| 5 | - | 0.01 | | | 28 |
| 6 | - | 0.02 | | | 54 |
| 7 | - | 0.03 | | | 49 |
| 8 | 0.05 | 0.007 | 10:7 | 11 | 16 |
| 9 | 0.05 | 0.01 | 5:1 | 44 | 47 |
| 10 | 0.01 | 0.02 | 1:2 | 32 | 48 |
| 11 | 0.02 | 0.02 | 1:1 | 31 | 70 |
| 12 | 0.05 | 0.02 | 5:2 | 31 | 36 |
| 13 | 0.02 | 0.03 | 2:3 | 53 | 77 |
| 14 | 0.05 | 0.03 | 5:3 | 53 | 71 |

Tabelle 3b

| (Wirkstoff IF = Cyproconazol) | | | | | |
|---|---|---|---|---|---|
| Versuch Nr. | mg Aktivsubstanz/l | | Verhältnis I:II | E % Wirkung berechnet [COLBY] | O % Wirkung gefunden |
| | Wirkstoff IF | Wirkstoff II | | | |
| 1 | 0.005 | - | | - | 0 |
| 2 | 0.01 | - | | - | 0 |
| 3 | 0.02 | - | | - | 0 |
| 4 | - | 0.03 | | - | 49 |
| 5 | 0.005 | 0.03 | 1:6 | 49 | 57 |
| 6 | 0.01 | 0.03 | 1:3 | 49 | 57 |
| 7 | 0.02 | 0.03 | 2:3 | 49 | 64 |

Beispiel 4: Wirkung gegen Alternaria solani

Methode:

Der Alternaria-Stamm wird während einer Woche auf 20%ig. V8-Agar bei 22°C im Dunkeln kultiviert.

Zur Prüfung der Fungizid-Aktivität werden abgestufte Wirkstoffkonzentrationen in V8-Agar eingearbeitet, auf dessen Oberfläche in der Petrischale A. solani inoculiert wird. Jede Konzentration läuft in 4 Wiederholungen. nach 7 Tagen wird das radiale Wachstum des Pilzes bzw. dessen Hemmung bestimmt.

Tabelle 4a

| (Wirkstoff IJ = Hexaconazol) | | | | | |
|---|---|---|---|---|---|
| Versuch Nr. | mg Aktivsubstanz/l | | I:II | E % Wirkung berechnet [COLBY] | O % Wirkung gefunden |
| | Wirkstoff IJ | Wirkstoff II | | | |
| 1 | 0.005 | - | | | 0 |
| 2 | 0.01 | - | | | 0 |
| 3 | 0.02 | - | | | 1.3 |
| 4 | - | 0.001 | | | 0 |
| 5 | - | 0.002 | | | 0 |
| 6 | - | 0.1 | | | 73.8 |
| 7 | - | 0.5 | | | 76.3 |
| 8 | - | 1.0 | | | 75.0 |
| 9 | 0.01 | 0.001 | 10:1 | 0 | 1.4 |
| 10 | 0.02 | 0.001 | 20:1 | 1.3 | 12.5 |
| 11 | 0.02 | 0.002 | 10:1 | 1.3 | 4.7 |
| 12 | 0.005 | 0.1 | 1:20 | 73.8 | 80 |
| 13 | 0.02 | 0.5 | 1:25 | 76.6 | 85 |
| 14 | 0.02 | 1.0 | 1:50 | 75.3 | 93 |

Aehnliche deutlich gesteigerte Wirkungen werden auch mit dem Wirkstoff IE 1 [3-(2-Chlorphenyl)-2-(4-fluorphenyl)oxiran-2-ylmethyl]-1H-1 ,2,4-triazol (BAS-480-F) und den anderen Triazol-Derivaten im Gemisch mit 4-Cyclopropyl-6-methyl-N-phenyl-2-pyrimidinamin erzielt.

Bevorzugte Mischungsverhältnisse (in Gewichtsmengen) sind in diesen Fällen:

IB : II = 3:1 bis 1:8 IG : II = 3:1 bis 1:12
IC : II = 2:1 bis 1:6 IH : II = 3:1 bis 1:8
ID : II = 5:1 bis 1:5 IJ : II = 5:1 bis 1:10
IE : II = 2:1 bis 1:8 IK : II = 2:1 bis 1:8.
IF : II = 5:1 bis 1:10

Diese deutlichen Wirkungssteigerungen bei 4-Cyclopropyl-6-methyl-N-phenyl-2-pyrimidinamin durch Zusatz eines beliebigen Triazol-Fungizides werden gegen echte Mehltau-Arten, gegen Rost- und Schorfkrankheiten, Halmbruch, Blattflecken (z.B Septoria oder Netzfleckenarten), Grauschimmelfäule und andere Pathogene erzielt.

**Patentansprüche**

**1.** Fungizides Zweikomponenten-Mittel in einem eine synergistische Wirkung erzeugenden Mengenverhältnis auf der Basis eines Ergosterin-Biosynthese-Hemmers der Triazol-Reihe als Komponente I und eines 2-Anilinopyrimidin-Derivats als Komponente II, dadurch gekennzeichnet, dass die Komponente I ausgewählt ist aus

A) 1-[2-(2,4-Dichlorphenyl)-4-propyl-1,3-dioxolan-2-ylmethyl]- 1H-1,2,4-triazol, („Propiconazol");

B) 1-(2-[2-Chlor-4-(4-chlorphenoxy)-phenyl]-4-methyl-1,3-dioxolan-2-ylmethyl)-1H-1,2,4-triazol, („Difenoconazol");

C) α-[2-(4-Chlorphenyl)ethyl]-α-(1,1-dimethylethyl)-1H-1,2,4-triazol-1-ethanol, („Tebuconazol");

D) 1-(4-Chlorphenoxy)-3,3-dimethyl-1-(1,2,4-triazol-1-yl)-butan-2-ol, („Triadimenol");

E) 1-[3-(2-Chlorphenyl)-2-(4-fluorphenyl)oxiran-2-ylmethyl]-1H-1,2,4-triazol,

F) α-(4-Chlorphenyl)-α-(1-cyclopropylethyl)-1H-1,2,4-triazol-1-ethanol, („Cyproconazol");

G) 4-(4-Chlorphenyl)-2-phenyl-2-(1,2,4-triazol-1-ylmethyl)-butyronitril, („Fenbuconazol");

H) α-(2-Fluorophenyl)-α-(4-fluorophenyl)-1H-1,2,4-triazol-1-ethanol, („Flutriafol")

J) α-Butyl-α-(2,4-dichlorphenyl)-1H-1,2,4-triazol-1-ethanol, („Hexaconazol"); und

K) 1-{[Bis(4-fluorophenyl)methylsilyl]methyl}-1H-1,2,4-triazol, („Flusilazol");
oder jeweils einem ihrer Salze oder Metallkomplexe; und dass die Komponente II 4-Cyclopropyl-6-methyl-N-phenyl-2-pyrimidinamin der Formel

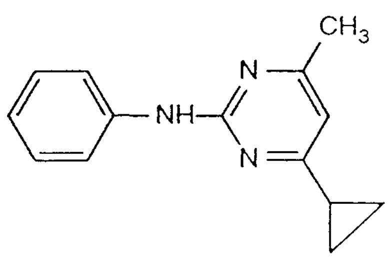

II

oder eines seiner Salze oder Metallkomplexe ist.

2. Mittel nach Anspruch 1, dadurch gekennzeichnet, dass das Gewichtsverhältnis I:II = 10:1 bis 1:20 beträgt.

3. Mittel nach Anspruch 2, dadurch gekennzeichnet, dass das Gewichtsverhältnis I:II = 6:1 bis 1:6 beträgt.

4. Mittel nach Anspruch 3, dadurch gekennzeichnet, dass das Gewichtsverhältnis I:II = 1:1 bis 1:6 beträgt.

5. Mittel gemäss Anspruch 1, wobei als Komponente I Propiconazol, die Verbindung IA, verwendet wird.

6. Mittel gemäss Anspruch 1, wobei als Komponente I Tebuconazol, die Verbindung IC, verwendet wird.

7. Mittel gemäss Anspruch 1, wobei als Komponente I Cyproconazol, die Verbindung IF, verwendet wird.

8. Mittel gemäss Anspruch 1, wobei als Komponente I Hexaconazol, die Verbindung IJ, verwendet wird.

9. Mittel gemäss Anspruch 1, wobei als Komponente I 1-[3-(2-Chlorphenyl)-2-(4-fluorphenyl)oxiran-2-ylmethyl]-1H-1,2,4-triazol,die Verbindung IE, verwendet wird.

10. Verwendung einer Wirkstoffkombination gemäss Anspruch 1 zur Bekämpfung von Pilzen oder zur Verhütung von Pilzbefall.

11. Verfahren zur Bekämpfung von Pilzen, dadurch gekennzeichnet, dass man in beliebiger Reihenfolge oder gleichzeitig eine durch Pilze befallene oder gefährdete Stelle mit einer Komponente I und der Komponente II gemäss Anspruch 1 behandelt.

12. Verfahren gemäss Anspruch 11, wobei die Komponente IA, Propiconazol, eingesetzt wird.

13. Verfahren gemäss Anspruch 11, wobei die Komponente IC, Tebuconazol, eingesetzt wird.

14. Verfahren gemäss Anspruch 11, wobei die Komponente IF,Cyproconazol, eingesetzt wird.

15. Verfahren gemäss Anspruch 11, wobei die Komponente IJ, Hexaconazol, eingesetzt wird.

16. Verfahren gemäss Anspruch 11, wobei die Komponente IE, 1-[3-(2-Chlorphenyl)-2-(4-fluorphenyl)oxiran-2-ylmethyl]-1H-1,2,4-triazol, eingesetzt wird.

## Claims

1. A fungicidal two-component composition in a ratio by weight which produces a synergistic effect on the basis of an ergosterin biosynthesis inhibitor from the triazole series as component I and a 2-anilinopyrimidine derivative as component II, wherein component I is selected from amongst

   A) 1-[2-(2,4-dichlorophenyl)-4-propyl-1,3-dioxolan-2-ylmethyl]-1H-1,2,4-triazole, ("propiconazole");

   B) 1-{2-[2-chloro-4-(4-chlorophenoxy)-phenyl]-4-methyl-1,3-dioxolan-2-ylmethyl}-1H-1,2,4-triazole, ("difenoconazole");

   C) α-[2-(4-chlorophenyl)ethyl]-α-(1,1-dimethylethyl)-1H-1,2,4-triazol-1-ylethanol, ("tebuconazole");

   D) 1-(4-chlorophenoxy)-3,3-dimethyl-1-(1,2,4-triazol-1-yl)-butan-2-ol, ("triadimenol");

   E) 1-[3-(2-chlorophenyl)-2-(4-fluorophenyl)oxiran-2-ylmethyl]-1H-1,2,4-triazole;

   F) α-(4-chlorophenyl)-α-(1-cyclopropylethyl)-1H-1,2,4-triazol-1-ylethanol, ("cyproconazole");

   G) 4-(4-chlorophenyl)-2-phenyl-2-(1,2,4-triazol-1-ylmethyl)-butyronitrile, ("fenbuconazole");

   H) α-(2-fluorophenyl)-α-(4-fluorophenyl)-1H-1,2,4-triazol-1-ylethanol, ("flutrialfol");

   J) α-butyl-α-(2,4-dichlorophenyl)-1H-1,2,4-triazol-1-ylethanol, ("hexaconazole"); and

   K) 1-{[bis(4-fluorophenyl)methylsilyl]methyl}-1H-1,2,4-triazole, ("flusilazole")
   or in each case a salt or metal complex thereof, and component II is 4-cyclopropyl-6-methyl-N-phenyl-2-pyrimidinamine, of the formula

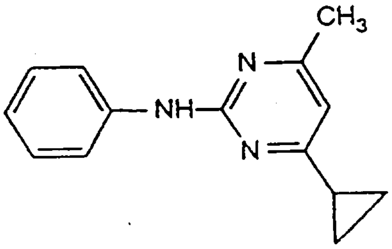

II

   or a salt or metal complex thereof.

2. A composition according to claim 1, wherein the ratio by weight is I:II = 10:1 to 1:20

3. A composition according to claim 2, wherein the ratio by weight is I:II = 6:1 to 1:6

4. A composition according to claim 3, wherein the ratio by weight is I:II = 1:1 to 1:6

5. A composition according to claim 1, wherein propiconazole, compound IA, is used as component I.

6. A composition according to claim 1, wherein tebuconazole, compound IC, is used as component I.

7. A composition according to claim 1, wherein cyproconazole, compound IF, is used as component I.

8. A composition according to claim 1, wherein hexaconazole, compound IJ, is used as component I.

9. A composition according to claim 1, wherein 1-[3-(2-chlorophenyl)-2-(4-fluorophenyl)oxiran-2-ylmethyl]-1H-1,2,4-triazole, compound IE, is used as component I.

10. The use of an active ingredient combination according to claim 1 for controlling fungi or preventing fungus infestation.

11. A method of controlling fungi, which comprises treating a locus infested with, or liable to be infested by, fungi with a component I and component II according to claim 1, either in any desired sequence or simultaneously.

12. A method according to claim 11, wherein component IA, propiconazole, is employed.

13. A method according to claim 11, wherein component IC, tebuconazole, is employed.

14. A method according to claim 11, wherein component IF, cyproconazole, is employed.

15. A method according to claim 11, wherein component IJ, hexaconazole, is employed.

16. A method according to claim 11, wherein component IE, 1-[3-(2-chlorophenyl)-2-(4-fluorophenyl)oxiran-2-ylmethyl]-1H-1,2,4-triazole, is employed.

## Revendications

1. Milieu fongicide à deux composants dans un rapport produisant un effet de synergie à base d'un inhibiteur de la biosynthèse de l'ergostérine de la série des triazoles comme composant I et d'un dérivé de 2-anilinopyrimidine comme composant II, caractérisé en ce que le composant I est choisi dans le groupe constitué par

   A) le 1-[2-(2,4-dichlorophényl)-4-propyl-1,3-dioxolan-2-ylméthyl]-IH-1,2,4-triazole ("Propiconazol");

   B) le 1-{2-[2-chloro-4-(4-chlorophénoxy)-phényl]-4-méthyl-1,3-dioxolan-2-ylméthyl}-IH-1,2,4-triazole ("Difenoconazol");

   C) l'α-[2-(4-chlorophényl)-éthyl]-α-(1,1-diméthyléthyl)-IH-1,2,4-triazol-1-éthanol ("Tebuconazol");

   D) le 1-(4-chlorophénoxy)-3,3-diméthyl-1-(1,2,4-triazol-1-yl)-butan-2-ol ("Triadimenol");

   E) le 1-[3-(2-chlorophényl)-2-(4-fluorophényl)-oxiran-2-ylméthyl]-IH-1,2,4-triazole;

   F) l'α-(4-chlorophényl)-α-(1-cyclopropyléthyl)-IH-1,2,4-triazol-I-éthanol ("Cyproconazol");

   G) le 4-(4-chlorophényl)-2-phényl-2-(1,2,4-triazol-1-ylméthyl)-butyronitrile ("Fenbuconazol");

   H) l'α-(2-fluorophényl)-α-(4-fluorophényl)-IH-1,2,4-triazol-I-éthanol ("Flutriafol");

   J) l'α -butyl-α-(2,4-dichlorophényl)-IH-1,2,4-triazol-1-éthanol ("Hexaconazol") et

   K) le I-{[bis(4-fluorophényl)-méthylsilyl]-méthyl}-IH-1,2,4-triazole ("Flusilazol");
   ou l'un de leurs sels ou de leurs complexes métalliques et en ce que le composant II est la 4-cyclopropyl-6-méthyl-N-phényl-2-pyrimidineamine de formule

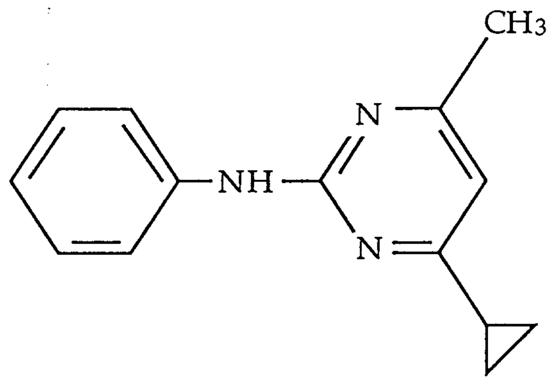

II

ou l'un de ses sels ou de ses complexes métalliques.

2. Composition selon la revendication 1, caractérisé en ce que le rapport pondéral I:II est compris entre 10:1 et 1:20.

3. Milieu selon la revendication 2, caractérisé en ce que le rapport pondéral I:II est compris entre 6:1 et 1:6.

4. Milieu selon la revendication 3, caractérisé en ce que le rapport pondéral I:II est compris entre 1:1 et 1:6.

5. Milieu selon la revendication 1, dans lequel le composant I est le propiconazol, le composé IA.

6. Milieu selon la revendication 1, dans lequel le composant I est le tebuconazol, le composé IC.

7. Milieu selon la revendication 1, dans lequel le composant I est le cyproconazol, le composé IF.

8. Milieu selon la revendication 1, dans lequel le composant I est l'hexaconazol, le composé IJ.

9. Milieu selon la revendication 1, dans lequel le composant I est le 1-[3-(2-chlorophényl)-2-(4-fluorophényl)-oxiran-2-ylméthyl]-1H-1,2,4-triazole, le composé IE.

10. Utilisation d'une combinaison des substances actives selon la revendication 1 pour lutter contre les champignons ou pour prévenir une attaque par les champignons.

11. Procédé pour lutter contre les champignons, caractérisé en ce que l'on traite dans un ordre quelconque ou en même temps l'endroit attaqué ou menacé par les champignons avec les composants I et II selon la revendication 1.

12. Procédé selon la revendication 11, dans lequel on utilise le composant IA, le propiconazol.

13. Procédé selon la revendication 11, dans lequel on utilise le composant IC, le tebuconazol.

14. Procédé selon la revendication 11, dans lequel on utilise le composant IF, le cyproconazol.

15. Procédé selon la revendication 11, dans lequel on utilise le composant IJ, l'hexaconazol.

16. Procédé selon la revendication 11, dans lequel on utilise le composant IE, le 1-[3-(2-chlorophényl)-2-(4-fluorophényl)-oxiran-2-ylméthyl]-IH-1,2,4-triazole.